# FASCICULE DE BREVET EUROPEEN

(11) **EP 1 655 584 B1**
(45) Date de publication et mention de la délivrance du brevet: **11.03.2009**
(21) Numéro de dépôt: 04292620.4
(22) Date de dépôt: 04.11.2004
(51) Int. Cl.: G01F 1/00

(54) **Pistolet d'arrosage avec compteur d'eau et programateur integres**
Sprühpistole zur Bewässerung mit integriertem und programmierbarem Wasserzähler
Spray pistol for irrigation comprising integrated and programable water counter

(43) Date de publication de la demande: 10.05.2006
(73) Titulaire: Vitkovsky, Bernard-Nicolas, 91640 Janvry (FR)
(72) Inventeur: Vitkovsky, Bernard-Nicolas, 91640 Janvry (FR)
(74) Mandataire: Schwartz, Thierry J.

(56) Documents cités:
- DE-U1- 29 907 539
- GB-A- 2 262 506
- US-A- 2 656 068

## Description

La présente invention concerne un dispositif permettant de connaître instantanément le débit d'eau consécutif à l'utilisation d'un tuyau d'arrosage, mais également de n'importe quel système d'arrosage , de nettoyage, et tout appareil nécessitant une alimentation d'eau (nettoyeur haute pression ou autre). Ce dispositif permet, ainsi, de connaître avec précision le volume d'eau délivré pendant un arrosage et de maîtriser sa consommation d'eau.

La présente invention a un double objectif :
1) Economique :
   La préservation de l'eau et de l'environnement est une préoccupation majeure. Des gestes simples permettent de contribuer à cette action et surtout de respecter cette richesse qui est l'eau.
   Aujourd'hui, pendant un arrosage, un individu ne connaît pas instantanément le volume d'eau utilisé, et de fait, sa consommation d'eau. D'autant plus, que celle-ci varie suivant plusieurs paramètres : taille du tuyau, pression disponible au robinet, utilisation simultané de plusieurs robinets, chasse ...
   Chaque particulier pourra désormais gérer avec précision sa consommation d'eau.
2) Pratique :
   - Il est souvent important de connaître avec précision le volume d'eau à déverser, à l'occasion notamment de plantations (plantes, arbustes, massifs...).En effet, un mauvais dosage peut nuire aux végétaux.
   - Par ailleurs, ce dispositif facilitera également certains travaux dont la préparation requiert un dosage d'eau précis (ciment, béton, plâtre, enduit, ...).

Le dispositif selon l'invention, consiste ainsi à connaître instantanément le volume d'eau utilisé, quel que soit l'unité de mesure retenue (litre, décalitre, hectolitre, m3...). Ce dernier se présente principalement sous deux formes :
A) soit un pistolet d'arrosage équipé directement d'un petit compteur d'eau programmable.
B) soit un petit compteur d'eau programmable amovible s'adaptant à l'aide de raccords rapides, comme il en existe déjà actuellement, à tous les types de tuyaux d'arrosage.

Dans les deux cas, les compteurs d'eau seraient de petite taille, conçus dans un matériau léger et robuste à la fois (plastique dur par exemple), fonctionnant de manière mécanique et ce dans n'importe quelle position (horizontale, verticale, incliné).

La lecture de l'information se présenterait par affichage digital. Ce système aurait l'avantage d'être programmable.

Par exemple :
- un signal sonore pourra retentir à chaque unité de mesure souhaitée (litre, décalitre, hectolitre, ...)
- l'affichage pourra être éclairé

Quelque soit le système d'affichage, le compteur d'eau serait équipé d'un bouton de remise à zéro.

Le dessin annexé illustre l'invention :

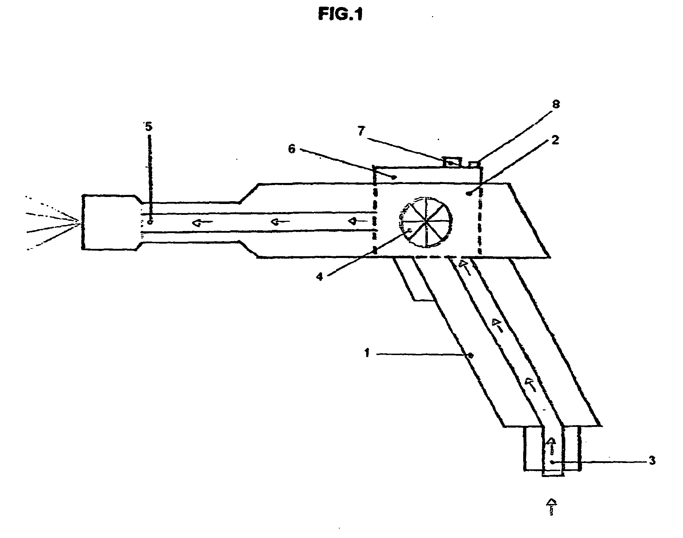

La figure 1 représente un exemple du dispositif de l'invention vue de coté.

En référence à ce dessin, le dispositif comporte un pistolet d'arrosage (1) auquel est adjoint un compteur d'eau (2). L'eau pénètre dans le pistolet d'arrosage (3) puis fait tourner la roulette du compteur d'eau (4) avant de ressortir (5). Cette roulette (4) actionne le système et permet la mesure, soit électroniquement, soit mécaniquement, de la quantité d'eau ainsi délivrée. La lecture de cette information (6) s'affiche au dessus du pistolet d'arrosage et un bouton de remise à zéro (7) permet de réinitialiser le système.Un bouton pression (8) permet également l'éclairage de la lecture de l'information.

## Revendications

1. Dispositif permettant de connaître instantanément la consommation d'eau pendant un arrosage, **caractérisé en ce qu'**il comporte un pistolet d'arrosage (1) équipé d'un petit compteur d'eau programmable (2).

2. Dispositif selon la revendication 1, **caractérisé en ce que** la lecture de l'information se présente sous forme d'affichage digital (6).

3. Dispositif selon l'une quelconque des revendications précédentes, **caractérisé en ce qu'**il est électronique et programmable.

4. Dispositif selon l'une quelconque des revendications précédentes, **caractérisé en ce qu'**il émet des signaux sonores à chaque unité de mesure choisie.

5. Dispositif selon l'une quelconque des revendications 2 à 4, **caractérisé en ce que** l'affichage est éclairé sur demande par pression de bouton (8).

6. Dispositif selon l'une quelconque des revendications précédentes, **caractérisé en ce qu'**il se présente également sous la forme d'un compteur d'eau amovible.

7. Dispositif selon la revendication 6, **caractérisé en ce que** le compteur d'eau amovible s'adapte aux différents type de tuyaux à l'aide de raccords rapides.

## Claims

1. A device enabling to instantly know the consumption of water during watering, **characterized in that** it includes a water sprayer (1) fitted with a small programmable water meter (2).

2. A device according to claim 1, **characterized in that** the reading of information is in the form of a digital display (6).

3. A device according to any one of the preceding claims, **characterized in that** it is electronic and programmable.

4. A device according to any one of the preceding claims, **characterized in that** it sends sound signals for each selected unit of measure.

5. A device according to any one of claim 2 to 4, **characterized in that** the display can be lit upon request by pressing a button (8).

6. A device according to any one of the preceding claims, **characterized in that** it can also be found in the form of a removable water meter.

7. A device according to claim 6, **characterized in that** the removable water meter can be fitted to the various types of hoses using quick couplings.

## Patentansprüche

1. Vorrichtung für die sofortige Erkennung des Wasserverbrauchs während eines Besprühens, **dadurch gekennzeichnet, dass** sie eine mit einem kleinen programmierbaren Wasserzähler (2) ausgestattete Sprühpistole (1) umfasst.

2. Vorrichtung gemäß Anspruch 1, **dadurch gekennzeichnet, dass** das Ablesen der Information in Form einer Digitalanzeige (6) erfolgt.

3. Vorrichtung nach einem der Anspruch 1 bis 2, **dadurch gekennzeichnet, dass** sie elektronisch und programmierbar ist.

4. Vorrichtung nach einem der Anspruch 1 bis 3, **dadurch gekennzeichnet, dass** sie bei jeder gewählten Maßeinheit Tonsignale abgibt.

5. Vorrichtung nach einem der Anspruch 2 bis 4, **dadurch gekennzeichnet, dass** die Anzeige auf Wunsch per Knopfdruck (8) beleuchtet wird.

6. Vorrichtung nach einem der Anspruch 1 bis 5, **dadurch gekennzeichnet, dass** sie ebenfalls die Form eines abnehmbaren Wasserzählers aufweisen kann.

7. Vorrichtung gemäß Anspruch 6, **dadurch gekennzeichnet, dass** der abnehmbare Wasserzähler anhand von Schnellanschlüssen an verschiedene Schlauchtypen angepasst werden kann.
